# FASCICULE DE BREVET EUROPEEN

(11) **EP 2 142 426 B1**
(45) Date de publication et mention de la délivrance du brevet: **08.05.2013**
(21) Numéro de dépôt: 08788023.3
(22) Date de dépôt: 19.03.2008
(51) Int. Cl.: B64C 25/36, B64D 27/02, B64D 41/00

(54) **PROCÉDÉ ET DISPOSITIF DE FREINAGE AÉRODYNAMIQUE À ACCUMULATION D'ÉNERGIE**
ENERGIEAUFBAUENDES AERODYNAMISCHES BREMSVERFAHREN UND ENTSPRECHENDE VORRICHTUNG
ENERGY BUILD-UP AERODYNAMIC BRAKING METHOD AND DEVICE

(30) Priorité: 20.03.2007 FR 0753929
(43) Date de publication de la demande: 13.01.2010
(73) Titulaire: AIRBUS OPERATIONS, 31060 Toulouse (FR)
(72) Inventeur: BELLEVILLE, Mathieu, F-31380 Bazus (FR)
(74) Mandataire: Schmit, Christian Norbert Marie
(86) Numéro de dépôt international: PCT/FR2008/050474
(87) Numéro de publication internationale: WO 2008/132375

(56) Documents cités:
- WO-A-00/59780
- FR-A- 859 585
- FR-A- 987 974
- FR-A- 1 047 826
- FR-A- 2 884 804
- GB-A- 2 263 675
- US-A- 1 765 818
- US-A- 5 150 859
- US-A1- 2005 224 642

## Description

La présente invention appartient au domaine du contrôle du vol des avions. Plus particulièrement l'invention concerne des dispositifs destinés à agir sur la force de traînée des avions généralement regroupés sous la dénomination « aérofrein ».

La traînée des aéronefs est normalement perçue comme un défaut contre lequel il convient de lutter car la traînée s'oppose à l'avancement de l'avion et provoque une consommation de carburant.

Il est toutefois des moments particuliers lors du vol d'un avion où il est utile d'augmenter la traînée afin de décélérer plus rapidement que sous le simple effet de la traînée ordinaire de l'avion ou afin d'éviter une accélération excessive lors d'une descente.

Pouvoir augmenter la traînée à certain moment du vol devient d'autant plus utile que le maximum d'efforts est fait par les équipes de conception pour réduire la traînée de croisière.

Pour augmenter la traînée, un avion 1 comporte des aérofreins 2 généralement constitués d'éléments rigides positionnés pour ne pas générer de traînée en croisière et comportant une ou plusieurs positions dites déployées de sorte que les éléments rigides offrent une surface qui s'oppose à l'avancement dans l'air. De nombreuses formes d'aérofreins, positionnés sur les ailes de l'avion ou sur le fuselage, existent et sont utilisées sur les avions civils ou militaires.

Ces aérofreins sont d'autant plus efficaces que la vitesse de l'avion est élevée. Plus précisément la force de traînée, donc la décélération résultante, est directement fonction de la pression dynamique, c'est-à-dire est, pour une position donnée des aérofreins, proportionnelle à un terme en pv² ou p est la masse volumique du fluide (l'air à l'altitude du vol) et V la vitesse d'avancement de l'avion par rapport au fluide.

Le problème de ce moyen de freinage est donc sa perte d'efficacité lorsque la vitesse diminue. Elle est par exemple 6 fois plus faible à 50m/s, vitesse typique d'un avion moderne au moment de l'atterrissage, qu'à 125m/s, vitesse typique en fin de descente, et elle devient rapidement négligeable lorsque la vitesse continue à diminuer notamment après l'atterrissage.

D'autres moyens existent pour ralentir un avion 1, en particulier après l'atterrissage, tels que l'inversion du sens de la poussée des moteurs 3 de l'avion ou le freinage des roues 4 en contact avec la piste.

Bien que largement utilisés sur les avions civils, ces moyens présentent de nombreux défauts.

Les inverseurs de poussée 5 utilisés sur les réacteurs sont complexes, lourds et chers tant en réalisation qu'en exploitation. En plus de la pénalité de masse qu'ils représentent pour l'avion, ils diminuent les performances du moteur en mode de fonctionnement normal du fait des imperfections inévitables de ces dispositifs qui induisent des traînées aérodynamiques et des pertes de charges sources de surconsommations.

Les systèmes de freins des roues 4 sont pour leur part d'une efficacité limitée lorsque la piste est contaminée par de l'eau, de la neige ou de la glace et leur utilisation provoque l'usure des éléments de frictions des freins et des pneumatiques qui doivent être remplacés d'autant plus fréquemment que les freins sont intensément utilisés.

Des solutions sont connues des documents FR987974 ou FR1047826 qui consistent à entraîner, par un moteur dédié à cette utilisation, en rotation des hélices antagonistes dont la traction résultante s'oppose à l'avancement de l'avion ou comme dans le document GB2263675 qui consiste à installer des réacteurs dont la poussée est orientée vers l'avant de l'avion afin de créer une poussé qui s'oppose à l'avancement.

Ces solutions font cependant appel à des moyens de propulsion spécifiques, lourds et de technologies complexes similaires à celles des moteurs de propulsion sans apporter d'avantage vis à vis des phases de vol normale de l'avion.

Il est également connu d'utiliser des hélices entraînées dans un mode éolienne pour générer en secours de l'énergie électrique ou hydraulique comme décrit par exemple dans le document US5150859 et dans certains dispositifs en utilisant des moyens de stockage de l'énergie pour absorber des pointes de consommation comme dans les solutions décrites dans les documents WO 00/59780 et FR 2884804.

Toutefois dans ces types de générateurs de secours, la traînée aérodynamique est considérée comme un inconvénient à minimiser et en tout état de cause ces dispositifs d'éoliennes ne fournissent aucune poussée vers l'arrière.

Le document US 1765818 appartient à cette famille de solutions. Il propose cependant un fonctionnement de l'éolienne pour augmenter la traînée aérodynamique, mais présente vis à vis du problème posé les mêmes défauts et en particulier une efficacité qui diminue lorsque la vitesse diminue.

Il existe donc un réel intérêt à utiliser des moyens qui permettent d'obtenir une force de freinage de l'avion efficace à toutes les vitesses et qui permettent de simplifier les dispositifs existant et d'en limiter l'utilisation en opération.

Pour réaliser un freinage aérodynamique efficace dans toutes les conditions, en particulier à basse vitesse, le dispositif de freinage aérodynamique d'un véhicule suivant l'invention comporte des premiers moyens embarqués pour produire une énergie apte à être stockée, des seconds moyens embarqués aptes à stocker l'énergie générée par lesdits premiers moyens et des troisièmes moyens embarqués pour générer une force aérodynamique à partir de l'énergie stockée dans lesdits seconds moyens.

Pour obtenir une force de freinage aérodynamique avec un bon rendement et une intensité suffisante, les troisièmes moyens embarqués de génération d'une force aérodynamique comportent au moins une hélice apte à être couplée à des moyens d'entraînement en rotation qui comportent de préférence au moins un moteur pneumatique et ou un moteur électrique et ou un moteur hydraulique apte à être alimenté par l'énergie stockée par les seconds moyens embarqués.

Dans un mode de réalisation, les premiers moyens embarqués pour produire l'énergie comportent au moins une hélice apte à être entraînée en rotation par le déplacement relatif du véhicule par rapport à la masse d'air.

Ladite au moins une hélice est couplée à au moins un générateur apte à produire l'énergie apte à être stockée.

Dans un autre mode de réalisation, lorsque le véhicule comporte des roues entraînées, au moins temporairement, en rotation par le déplacement du véhicule sur le sol, les premiers moyens embarqués pour produire l'énergie comporte au moins un générateur, apte à produire l'énergie apte à être stockée, entraîné au moins pendant la phase considéré par la rotation des roues.

Ainsi lorsque l'énergie stockée est prélevée sur l'énergie cinétique du véhicule, le prélèvement est réalisé en utilisant le déplacement du véhicule par rapport à la masse d'air, en particulier dans des périodes pendant lesquelles la vitesse par rapport à l'air est élevée, et ou en utilisant le déplacement du véhicule par rapport au sol.

Le au moins un générateur apte à produire l'énergie apte à être stockée est avantageusement un compresseur comprimant un gaz ou un générateur électrique ou une pompe hydraulique.

Les seconds moyens embarqués aptes à stocker l'énergie sont des moyens statiques d'accumulation d'énergie comportant au moins un réservoir de gaz comprimé et ou aux moins une batterie d'accumulation électrique ou électrochimique, ou bien sont des moyens à accumulation cinétique d'énergie comportant au moins un volant d'inertie apte à tourner autour d'un axe, c'est à dire sous une forme forme utilisable par les moyens qui génèrent la force de freinage aérodynamique.

Lorsque les moyens d'accumulation d'énergie utilisent un volant d'inertie, le dit volant d'inertie est entraîné en rotation autour de son axe par un moteur pneumatique et ou par un moteur hydraulique, ou bien est couplé mécaniquement à l'hélice fonctionnant en mode éolienne.

Avantageusement pour faciliter l'installation du volant d'inertie lorsque les moyens d'accumulation utilisent un volant d'inertie, ledit volant d'inertie est apte à entraîner en rotation des moyens de génération d'énergie lesquels comportent au moins un compresseur pneumatique et ou un générateur électrique et ou une pompe hydraulique.

Avantageusement les moyens d'entraînement en rotation du au moins un volant d'inertie sont aptes à générer l'énergie lorsqu'ils sont entraînés en rotation par ledit au moins un volant d'inertie.

Avantageusement, la au moins une hélice utilisée par les troisièmes moyens pour générer la force aérodynamique de freinage est également utilisée par les premiers moyens pour produire l'énergie apte à être stockée et le au moins un générateur apte à produire de l'énergie lorsque qu'il est entraîné par la ou moins une hélice est également apte à entraîner l'hélice en rotation lorsqu'il est alimenté en énergie.

De manière conjointe ou alternative, les moyens d'accumulation sont aptes à être alimentés en énergie par des générateurs couplés à des générateurs de puissance embarqués de sorte que l'énergie générée est prélevée sur l'énergie cinétique du véhicule et ou produite par des moyens embarqués.

Afin de contrôler la charge des moyens d'accumulation et la force de freinage aérodynamique, le dispositif comporte des moyens de régulation agissant sur le pas des pales de la au moins une hélice.

Avantageusement l'intensité et la direction de la force de freinage aérodynamique générée au cours de l'étape d'utilisation de l'énergie sont modulées pour correspondre à la décélération recherchée du véhicule et éviter ou limiter l'usage d'autres moyens de freinage.

Pour minimiser l'impact du dispositif sur l'aérodynamique du véhicule, le dispositif comporte des moyens pour stocker les éléments de génération d'énergie et ou de génération des forces de freinage aérodynamique, en contact avec l'écoulement aérodynamique lorsqu'ils sont utilisés, afin de réduire la traînée aérodynamique lorsqu'ils ne sont pas utilisés.

La description détaillée d'un mode de réalisation de l'invention est faite en référence aux figures qui présentent:

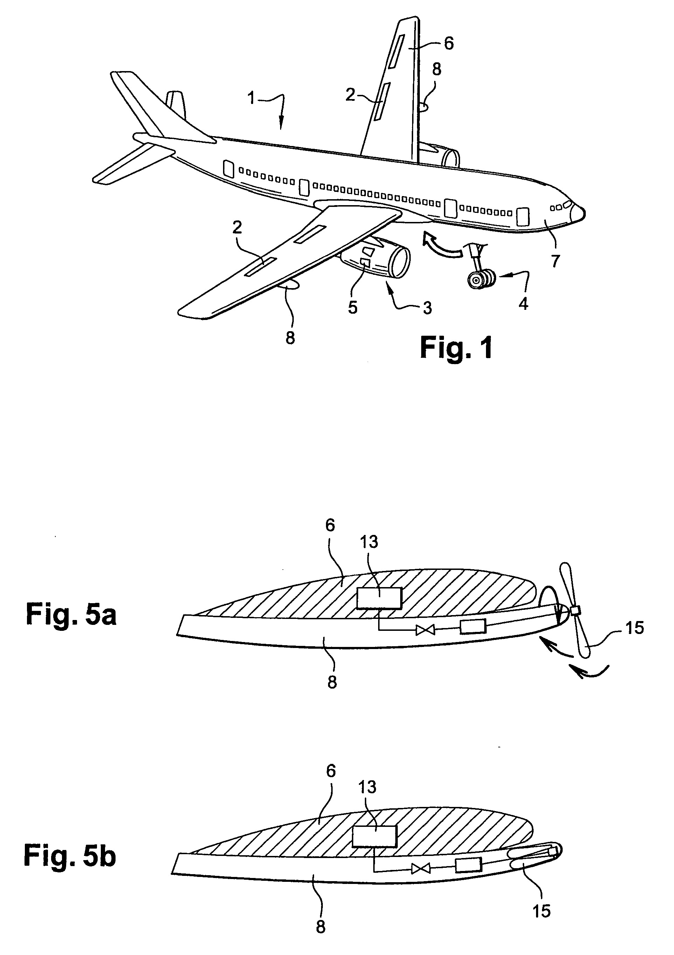

- Figure 1 :: déjà citée, une vue générale d'un avion et des différentes parties utilisées lors de la mise en oeuvre de l'invention ;
- Figure 2 :: un schéma de principe de l'invention et de ses composants essentiels ;
- Figure 3 :: un schéma de principe d'un mode de réalisation de l'invention utilisant des composants au fonctionnement réversible ;
- Figure 4 :: un schéma de principe d'un mode de réalisation de l'invention mettant en oeuvre un stockage cinétique de l'énergie et un mode éolienne de captation d'énergie ;
- Figure 5a et 5b :: une vue en coupe d'un exemple d'installation du dispositif suivant l'invention dans la voilure d'un avion, en position opérationnelle sur la figure 5a et en position stockée sur la figure 5b.

Le procédé suivant l'invention consiste dans une première étape à stocker une énergie disponible à bord de l'avion en prélevant cette énergie par des moyens et à des étapes du vol où l'impact dudit prélèvement d'énergie sur les performances de l'avion est bénéfique ou acceptable en terme de dégradation, et dans une seconde étape à utiliser l'énergie stockée pour générer une force aérodynamique opposée à la vitesse d'avancement de l'avion.

Dans un premier mode de mise en oeuvre du procédé l'énergie stockée est prélevée sur l'énergie cinétique de l'avion 1 et est générée en utilisant de la vitesse V de l'avion 1 par rapport à l'air.

L'énergie est prélevée au moyen d'au moins une hélice 10 solidaire de l'avion 1 et fonctionnant dans un mode dit éolienne, c'est-à-dire que l'hélice est entraînée par la vitesse relative de l'écoulement provoquée par le déplacement de l'avion 1 dans l'air.

L'arbre de rotation 11 de l'hélice 10 est relié à un arbre tournant d'un générateur 12 de telle sorte que le générateur 12 soit entraîné par la rotation de l'hélice 10. Le générateur 12 est choisi afin de produire une énergie apte à être transportée par des moyens de transfert 16 pour être stockée dans des moyens d'accumulation 13 embarqués. Des moyens de contrôle et de régulation 17, contrôlé par exemple par un calculateur non représenté, sont associés aux moyens de génération, de transport et de stockage de l'énergie.

Une méthode consiste à stocker l'énergie sous la forme d'un gaz comprimé dans au moins un réservoir des moyens d'accumulation 13, par exemple de l'air et dans ce cas le générateur 12 comporte avantageusement des moyens de compression qui sont couplés à l'hélice 10. Lorsque l'hélice 10 est entraînée en rotation par le déplacement relatif de l'air autour de l'avion 1, les moyens de compression comprime un gaz, par exemple de l'air prélevé dans l'environnement de l'avion, et ce gaz comprimé est envoyé vers le au moins un réservoir pour y être stocké au moyen de canalisations comportant des moyens tels que vannes, clapets, sondes et régulateurs utiles au fonctionnement du dispositif.

Une autre méthode consiste à stocker l'énergie sous forme électrique dans des batteries d'accumulateurs électriques ou électrochimiques associées aux moyens d'accumulation 13 et dans ce cas le générateur 12 comporte avantageusement des moyens de génération électrique couplés à l'hélice 10. Lorsque l'hélice 10 est entraînée en rotation par le déplacement relatif de l'air autour de l'avion, les moyens de génération électrique produisent une énergie électrique qui est utilisée pour charger les batteries d'accumulateurs.

Une autre méthode consiste à stocker l'énergie sous forme cinétique au moyen de dispositifs à accumulation cinétique comportant au moins un volant d'inertie 14 entraîné en rotation par des moyens d'entraînement aptes à coupler l'arbre 11 de l'hélice 10 et l'arbre du au moins un volant d'inertie. Dans ce cas l'énergie stockée est fonction de la vitesse de rotation w du ou des volants d'inertie 14 et les moyens d'entraînement sont avantageusement aptes à faire varier le rapport entre la vitesse de rotation de l'arbre 11 de l'hélice 10 et la vitesse de rotation ω du au moins un volant d'inertie 14.

Ces moyens d'entraînement à rapport variable peuvent consister par exemple en un ensemble de pignons dont différentes positions relatives permettent d'obtenir des rapports de vitesses de rotation différentes entre un arbre d'entrée et un arbre de sortie. Ils peuvent également consister en des moyens d'entraînement hydrauliques dans lequel l'hélice 10 entraîne une pompe hydraulique et le au moins un volant d'inertie 14 est entraîné par un moteur hydraulique couplé à ladite pompe, la dite pompe et ou ledit moteur étant à cylindrées variables.

Ils peuvent également consister en des moyens d'entraînement électriques ou pneumatiques dans lequel l'hélice 10 entraîne un générateur électrique ou pneumatique et le au moins un volant d'inertie 14 est entraîné par un moteur électrique ou pneumatique couplé au générateur associé aux moyens d'entraînement.

Des moyens de régulation non représentés sont avantageusement mis en oeuvre pour que le dispositif destiné à générer l'énergie et à stocker ladite énergie fonctionne dans le respect des différentes limitations mécaniques et ou électriques et ou hydrauliques et ou aérodynamiques que de tels moyens rencontrent. En particulier l'hélice 10 comporte avantageusement des pales 15 à pas variable et le pas est modifié de manière contrôlée par les moyens de régulation en fonction de la vitesse de rotation de l'hélice et de la charge de l'hélice.

Lorsqu'une énergie a été stockée dans les moyens d'accumulation 13 embarqués, ladite énergie est utilisée pour générer une force de freinage aérodynamique au moyen d'une hélice 20, couplée à un moteur 21 raccordé aux moyens d'accumulation 13 par des moyens 18 de transfert de l'énergie, dont le sens de rotation et le pas sont choisis afin d'engendrer sur l'avion 1 une force opposée à la direction de déplacement dans l'air dudit avion. La force créée par cette hélice 20 présente les avantages de
1/ pouvoir être modulée en intensité notamment en agissant sur les moyens de contrôle 19 de la puissance délivrée par ce moteur 21;
2/ pouvoir conserver une intensité élevée lorsque la vitesse V de l'avion est faible, ce que ne permettent pas les aérofreins conventionnels 2.

Le moteur 21 qui entraîne l'hélice 20 lors des phases de freinage aérodynamique est adapté au mode de stockage de l'énergie et à son mode de restitution. De préférence le moteur 21 est un moteur pneumatique lorsque l'énergie est stockée dans les moyens d'accumulation 13 sous la forme de gaz comprimé ou un moteur électrique lorsque l'énergie est stockée dans des batteries d'accumulateur électrique.

Lorsque l'énergie est stockée sous forme cinétique, l'hélice 20 est entraînée soit par une liaison mécanique avec le volant d'inertie 14, le volant d'inertie 14 faisant office d'un rotor de moteur, soit le volant d'inertie 14 entraîne un générateur, qui peut être par exemple hydraulique, pneumatique ou électrique, et l'hélice 20 est entraînée par un moteur couplé au générateur et entraîné par le volant d'inertie adapté à la technologie choisie.

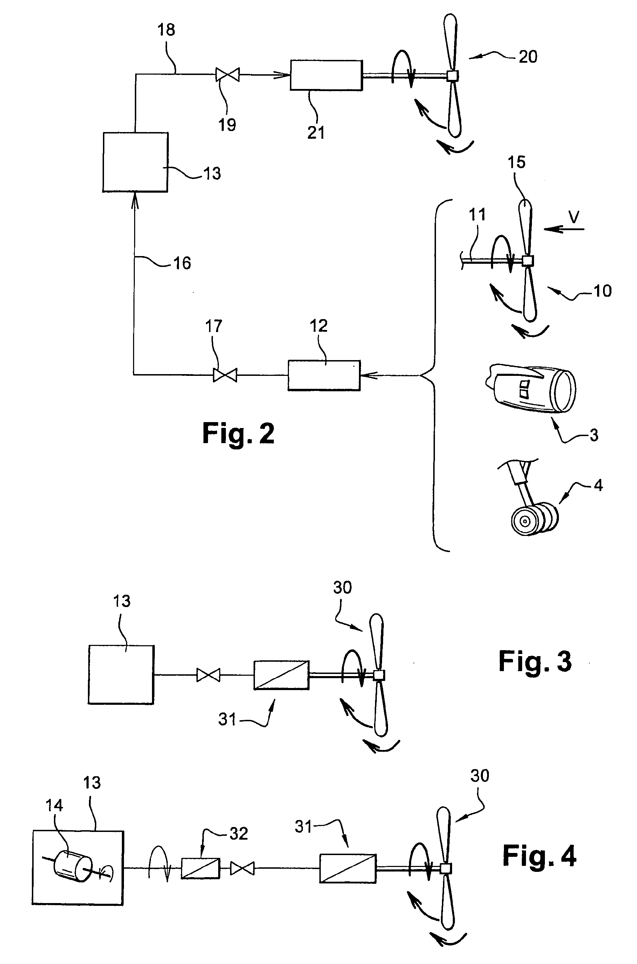

Avantageusement, certains moyens utilisés pour la mise en oeuvre de l'étape d'accumulation d'énergie et pour l'étape de création d'une force aérodynamique de freinage sont les mêmes et choisis afin de fonctionner de manière réversible comme illustré sur les figures 3 et 4.

En particulier, l'hélice 30 qui est utilisée pour générer la force de freinage aérodynamique lorsqu'elle est entraînée par un moteur, est avantageusement utilisée pour produire l'énergie devant être stockée en entraînant un générateur. Le générateur (pneumatique, hydraulique ou électronique) est alors de préférence choisi afin d'être apte.à fonctionner en mode moteur suivant que le dispositif fonctionne en mode stockage d'énergie ou en mode création d'une force aérodynamique de freinage.

De tels générateurs/moteurs 31 dont le fonctionnement est réversible sont bien connus dans les domaines hydrauliques, pneumatiques et électriques et en utilisant un moteur/générateur 31 couplé à l'hélice 30 et un moteur/générateur 32 couplé à des moyens d'accumulation cinétique si ces moyens sont utilisés, il est possible de diminuer la masse, le volume et le coût du dispositif suivant l'invention.

Afin de ne pas générer en croisière une pénalité de traînée inacceptable lorsque le dispositif n'est pas utilisé, l'hélice 10, 20, 30 est avantageusement repliée, c'est-à-dire que les pales 15 de l'hélice sont placées avec leur axe sensiblement parallèle à l'axe de rotation de l'hélice.

Dans une autre forme de réalisation, non représentée, l'hélice est portée par un dispositif mécanique qui permet de stocker l'hélice pales repliées ou non, lorsque ladite hélice est inutilisée, dans un logement aménagé à cet effet.

Les composants (générateurs, moteurs, moyens de stockages et systèmes de contrôle et de régulation du dispositif) sont de préférence répartis dans des volumes disponibles du fuselage 7 et ou de la voilure 6 de l'avion 1. Lorsque les contraintes d'installation des différents composants, en particulier les distances entre les moyens de stockage et les moyens de génération et/ou les moteurs doivent être limitées, par exemples pour des liaisons pneumatiques ou hydrauliques, les composants peuvent être assemblés dans des volumes protégés par des carénages aérodynamiques 8 qui avantageusement sont associés à des carénages de l'avion existant pour d'autres raisons, par exemple des carénages enveloppant les rails des volets de courbure.

L'énergie devant être stockée, produite par l'hélice 10, 30 couplée à un générateur et entraînée en rotation sous l'effet du déplacement relatif de l'avion par rapport à la masse d'air, sera produite de préférence à un moment d'une part où un freinage aérodynamique est recherché, car cette production d'énergie génère une force de traînée, et d'autre part lorsque la vitesse de l'avion est encore relativement élevée, pour bénéficier d'une pression dynamique élevée pour entraîner l'hélice et le générateur couplé à ladite hélice. Ces conditions se rencontrent au cours du vol d'un avion par exemple lors de la descente depuis une altitude de croisière vers une altitude d'attente ou d'approche, la vitesse V est élevée et les aérofreins 2 sont fréquemment utilisés pour maintenir ou diminuer la vitesse sur trajectoire pendant la descente et ou pour descendre plus rapidement sans que la vitesse sur trajectoire n'augmente. Au cours d'une phase de descente il est donc possible de bénéficier d'une pression dynamique élevée pour entraîner efficacement l'hélice en mode éolienne et en générant une traînée aérodynamique qui provoque un freinage recherché. En outre la phase de descente pendant laquelle ces conditions, pression dynamique élevée et besoin de freinage aérodynamique, sont rencontrées, précède généralement une phase de vol conduisant à l'atterrissage pendant laquelle la pression dynamique est beaucoup plus faible en raison de la vitesse réduite de l'avion et pendant laquelle il est utile, sinon nécessaire, d'utiliser des moyens de freinage aérodynamique efficaces. Lorsque le freinage aérodynamique provoqué par le fonctionnement en mode éolienne de l'hélice 10, 30 pour stocker de l'énergie n'est plus suffisant, l'énergie stockée dans les moyens 13 est utilisée pour entraîner une hélice 20, 30, de préférence la même hélice 30 comme déjà décrit, et générer dynamiquement une force de freinage aérodynamique.

Dans un second mode de mise en oeuvre du procédé l'énergie stockée est prélevée sur l'énergie cinétique de l'avion 1 et est générée au moyen de la vitesse de l'avion par rapport au sol lorsque l'avion 1 est posé sur le sol.

Dans ce second mode des roues 4 entraînent des moyens 12 de génération d'une énergie apte à être stockée par les moyens d'accumulation 13 et ou à être utilisée par des moyens de freinage aérodynamique.

De manière similaire au premier mode la force de freinage aérodynamique est créée au moyen d'au moins une hélice 20 dont le pas et le sens de rotation génèrent sur l'avion 1 une force opposée au sens d'avancement de l'avion. La dite au moins une hélice 20 est entraînée par un moteur 21 alimenté par l'énergie stockée dans les moyens d'accumulation 13.

Par exemple lorsque l'avion 1 se pose et que les roues sont mises en rotation par le déplacement de l'avion sur la piste, des moyens de génération d'air comprimé couplés aux roues sont entraînés et produisent de l'air sous pression qui est stocké dans au moins un réservoir. Ledit air sous pression est utilisé par un moteur pneumatique couplé à la au moins une hélice pour entraîner ladite au moins une hélice en rotation. Les moyens de génération et de stockage peuvent comme précédemment utiliser une autre forme d'énergie électrique par exemple.

Dans ce second mode, les moyens d'accumulation 13 sont de préférence des moyens permettant une accumulation rapide de l'énergie. En effet la phase de roulage d'un avion à l'atterrissage est brève et le maximum d'énergie doit être prélevé au début de l'atterrissage lorsque la vitesse de roulage est maximale, donc l'énergie cinétique de l'avion encore relativement élevée, pour être utilisée pour créer une force de freinage aérodynamique pendant toute la phase de roulage. De façon conjuguée ou alternative, l'énergie produite par les moyens de génération couplés aux roues 4 peut être directement utilisée par les moyens de génération de la force de freinage aérodynamique sans avoir été stockée.

En outre le prélèvement d'énergie sur les roues 4 pour alimenter les moyens de génération de la force aérodynamique de freinage participe à la décélération de l'avion au roulage ce qui permet de limiter l'utilisation des freins conventionnels.

Dans un troisième mode de mise en oeuvre du procédé l'énergie stockée est produite par au moins un moteur 3 de l'avion 1. Ce moteur peut être un moteur utilisé pour la propulsion de l'avion ou un moteur d'un groupe auxiliaire de puissance.

Dans ce troisième mode le au moins un moteur 3 entraînent des moyens 12 de génération d'une énergie apte à être stockée et ou à être utilisée par les moyens de freinage aérodynamique. Avantageusement ces moyens 12 de génération sont des moyens déjà existants et disponibles. En effet la plupart des moteurs des avions modernes comportent des générations électriques et ou des générations hydrauliques et ou des générations d'air sous pression aptes à générer une énergie pouvant être stockée et il n'est pas nécessaire d'utiliser des moyens de génération supplémentaires.

Avantageusement l'énergie stockée est fournie par le au moins un moteur 3 pendant des phases de vol de l'avion 1 au cours desquelles les performances dudit moteur ne sont pas critiques, par exemple au cours de la descente qui précède l'atterrissage s'il s'agit d'un moteur utilisé pour la propulsion. De façon conjuguée ou alternative, l'énergie produite par le au moins un moteur 3 peut être directement utilisée par les moyens de génération de la force de freinage aérodynamique sans avoir été stockée.

Dans tous les modes de réalisation de l'invention, la au moins une hélice 20, 30 utilisée par le dispositif pour créer une force de freinage aérodynamique est avantageusement utilisée pour créer une traînée aérodynamique passive réglable lorsque les moyens d'accumulation de l'énergie ne sont pas raccordés au générateur 12, par exemple lorsqu'ils ont atteint leurs capacités de stockage maximal. La valeur de cette traînée aérodynamique peut être modulée notamment en agissant sur la charge de l'hélice en mode éolienne.

Ce mode de fonctionnement permet d'éviter l'installation d'un dispositif d'aérofreins conventionnels ou de simplifier un tel dispositif par rapport à une conception conventionnelle.

Pour tous les modes de réalisation, lorsque la vitesse V devient trop faible pour que l'efficacité d'autres moyens de freinage aérodynamique par génération de traînée aérodynamique soit satisfaisante en raison de leur dépendance à la pression dynamique, l'énergie stockée est utilisée pour entraîner en rotation l'hélice 20, 30 dont le pas et la puissance d'entraînement sont ajustés pour fournir la force opposée à la direction d'avancement de l'avion correspondant au freinage aérodynamique recherché.

Suivant le procédé il est possible d'obtenir une force de freinage aérodynamique jusqu'à une vitesse nulle de l'avion sur la piste, c'est-à-dire dans des conditions où les aérofreins n'ont plus aucune efficacité, et donc de remplacer, au moins partiellement, les dispositifs utilisés conventionnellement pour freiner l'avion 1 après l'atterrissage comme les inverseurs de poussée 5 des moteurs 3 et ou les freins de roues 4.

Avantageusement un avion est équipé de deux ou plusieurs dispositifs suivant l'invention ou d'un dispositif comportant deux ou plusieurs hélices de génération d'énergie et ou de freinage aérodynamique partageant les mêmes moyens de stockage de l'énergie.

Pour obtenir une efficacité satisfaisante du freinage aérodynamique et un impact minimal sur les performances en croisière, le dispositif est soigneusement intégré à l'avion sur le plan aérodynamique.

L'intégration aérodynamique des formes d'un avion fait partie du travail ordinaire des concepteurs en aérodynamique.

Avantageusement les éléments du dispositif seront intégrés dans des volumes disponibles de la structure, de carénages 8 existants tels que des carénages de volets, ou dans des carénages spécifiques conçus pour les besoins du dispositif.

Lorsqu'un avion est équipé d'au moins une hélice de freinage aérodynamique de chaque côté du plan de symétrie de l'avion sur les voilures par exemple, des écarts des forces de freinage aérodynamique entre les côtés gauche et droit permettent d'agir sur le contrôle latéral de l'avion, comme avec des aérofreins conventionnels, mais jusqu'à des vitesses beaucoup plus faibles, voir des vitesses nulles.

Bien que le procédé de freinage aérodynamique et les moyens associés soient appliqués dans la description détaillée au cas particulier d'un avion, l'homme du métier pourra aisément adapter le dispositif à des véhicules terrestres ou de surface qui dans certaines conditions ont avantage à utiliser des moyens de freinage aérodynamique. De telles conditions se rencontrent en particulier lorsque l'adhérence des dits véhicules au sol ne permet pas de générer des forces de freinage par frottement suffisantes, par exemple sur sol glissant, pour produire les décélérations voulues.

## Revendications

1. Dispositif de freinage aérodynamique d'un véhicule (1) en déplacement dans l'air comportant des premiers moyens embarqués (12, 10, 3, 4, 30, 31) pour produire une énergie apte à être stockée, des seconds moyens embarqués (13) aptes à stocker l'énergie générée par lesdits premiers moyens et des troisièmes moyens embarqués (20, 21) pour générer une force de freinage aérodynamique à partir de l'énergie stockée dans lesdits seconds moyens, les dits troisièmes moyens comportant au moins une hélice (20, 30) entraînée en rotation pour engendrer sur le véhicule (1) une force opposée à la direction du déplacement dans l'air.

2. Dispositif suivant la revendication 1 dans lequel les premiers moyens comportent au moins une hélice (10, 30) apte à être entraînée en rotation par le déplacement relatif du véhicule (1) par rapport à la masse d'air, ladite au moins une hélice étant couplée à au moins un générateur (12, 31) apte à produire l'énergie apte à être stockée.

3. Dispositif suivant la revendication 2 dans lequel le véhicule (1) comporte des roues (4) entraînées, au moins temporairement, en rotation par le déplacement dudit véhicule sur le sol et dont les premiers moyens embarqués pour produire l'énergie comporte au moins un générateur (12), apte à produire l'énergie apte à être stockée, apte à être entraîné par la rotation des dites roues.

4. Dispositif suivant l'une des revendications 1 à 3 dans lequel le au moins un générateur (12, 31) apte à produire l'énergie apte à être stockée est un compresseur comprimant un gaz ou un générateur électrique ou une pompe hydraulique.

5. Dispositif suivant l'une des revendications 1 à 4 dans lequel les seconds moyens (13) embarqués aptes à stocker l'énergie sont des moyens statiques d'accumulation d'énergie comportant au moins un réservoir d'un gaz comprimé et ou au moins une batterie d'accumulation électrique ou électrochimique, et ou sont des moyens à accumulation cinétique d'énergie comportant au moins un volant d'inertie (14) apte à tourner autour d'un axe.

6. Dispositif suivant la revendication 5 dans lequel un volant d'inertie (14) est apte à être entraîné en rotation autour de son axe par un moteur pneumatique et ou par un moteur électrique et ou par un moteur hydraulique (32).

7. Dispositif suivant la revendication 6 dans lequel le volant d'inertie (14) est apte à entraîner en rotation des moyens (32) de génération d'énergie.

8. Dispositif suivant la revendication 7 dans lequel les moyens de génération d'énergie (32) comportent au moins un compresseur pneumatique et ou un générateur électrique et ou une pompe hydraulique.

9. dispositif suivant la revendication 7 ou la revendication 8 dans lequel les moyens d'entraînement (32) en rotation du au moins un volant d'inertie sont aptes à générer l'énergie lorsqu'ils sont entraînés en rotation par ledit au moins un volant d'inertie.

10. Dispositif suivant la revendication 9 dans lequel des moyens d'entraînement en rotation (21, 31) couplés à l'hélice (20, 30) comportent au moins un moteur pneumatique et ou un moteur électrique et ou un moteur hydraulique apte à être alimenté par l'énergie stockée par les seconds moyens embarqués (13).

11. Dispositif suivant la revendication 10 dans lequel au moins une hélice (20, 30) utilisée par les troisièmes moyens pour générer la force aérodynamique de freinage est également utilisée par les premiers moyens pour produire l'énergie apte à être stockée.

12. Dispositif suivant la revendication 11 dans lequel le au moins un générateur (31) apte à produire de l'énergie lorsque qu'il est entraîné par la ou moins une hélice (30) est également apte à entraîner l'hélice (30) en rotation lorsqu'il est alimenté en énergie.

13. Dispositif suivant l'une des revendications précédentes dans lequel l'au moins une hélice (30) des premiers moyens est couplée mécaniquement à des moyens (14) d'accumulation cinétique de l'énergie.

14. Dispositifs suivant l'une des revendications précédentes dans lequel les second moyens embarqués (13) sont aptes à être alimentés en énergie par au moins un générateur (12) couplé à des générateurs de puissance embarqués (3).

15. Dispositif suivant l'une des revendications précédentes comportant des moyens de régulation agissant sur le pas de pales (15) de la ou des hélices (10, 20, 30).

## Patentansprüche

1. Vorrichtung zum aerodynamischen Abbremsen eines sich in der Luft bewegenden Fahrzeuges (1), umfassend erste mitgeführte Mittel (12, 10, 3, 4, 30, 31) zur Erzeugung von Energie, die gespeichert werden kann, zweite mitgeführte Mittel (13), die zur Speicherung der von den ersten Mitteln erzeugten Energie geeignet sind, und dritte mitgeführte Mittel (20,21) zur Erzeugung einer aerodynamischen Bremskraft ausgehend von der in den zweiten Mitteln gespeicherten Energie, wobei die dritten Mittel mindestens einen Propeller (20, 30) umfassen, der in Drehung versetzt wird, um an dem Fahrzeug (1) eine Kraft zu erzeugen, die der Bewegungsrichtung in der Luft entgegengesetzt ist.

2. Vorrichtung nach Anspruch 1, wobei die ersten Mittel mindestens einen Propeller (10, 30) umfassen, der dazu geeignet ist, durch die relative Bewegung des Fahrzeugs (1) in Bezug auf die Luftmasse in Drehung versetzt zu werden, wobei der mindestens eine Propeller an mindestens einen Generator (12, 31) gekoppelt ist, welcher zur Erzeugung der Energie, die gespeichert werden kann, geeignet ist.

3. Vorrichtung nach Anspruch 2, wobei das Fahrzeug (1) Räder (4) umfasst, welche mindestens vorübergehend durch die Bewegung des Fahrzeugs über den Boden in Drehung versetzt werden, und deren erste mitgeführte Mittel zur Erzeugung der Energie mindestens einen Generator (12) umfassen, welcher zur Erzeugung der Energie, die gespeichert werden kann, geeignet ist, der zum Antrieb durch die Drehung der Räder geeignet ist.

4. Vorrichtung nach einem der Ansprüche 1 bis 3, wobei der mindestens eine Generator (12, 31), welcher zur Erzeugung der Energie, die gespeichert werden kann, geeignet ist, ein Kompressor, der ein Gas komprimiert, oder ein elektrischer Generator oder eine Hydraulikpumpe ist.

5. Vorrichtung nach einem der Ansprüche 1 bis 4, wobei die zweiten mitgeführten Mittel (13), welche zur Speicherung der Energie geeignet sind, statische Mittel zur Akkumulation von Energie, welche mindestens einen Druckgasbehälter und/oder mindestens eine elektrische oder elektrochemische Akkumulatorbatterie umfassen, und/oder Mittel zur kinetischen Energieakkumulation sind, welche mindestens ein Schwungrad (14) umfassen, welches zur Drehung um eine Achse geeignet ist.

6. Vorrichtung nach Anspruch 5, wobei ein Schwungrad (14) dazu geeignet ist, von einem Druckluftmotor und/oder von einem Elektromotor und/oder von einem Hydraulikmotor (32) in Drehung um seine Achse versetzt zu werden.

7. Vorrichtung nach Anspruch 6, wobei das Schwungrad (14) dazu geeignet ist, Mittel (32) zur Erzeugung von Energie in Drehung zu versetzen.

8. Vorrichtung nach Anspruch 7, wobei die Mittel zur Erzeugung von Energie (32) mindestens einen Druckluftkompressor und/oder einen elektrischen Generator und/oder eine Hydraulikpumpe umfassen.

9. Vorrichtung nach Anspruch 7 oder Anspruch 8, wobei die Mittel (32) zum Indrehungversetzen mindestens eines Schwungrads zur Erzeugung der Energie geeignet sind, wenn sie durch das mindestens eine Schwungrad in Drehung versetzt werden.

10. Vorrichtung nach Anspruch 9, wobei Drehantriebsmittel (21, 31), welche an den Propeller (20, 30) gekoppelt sind, mindestens einen Druckluftmotor und/oder einen Elektromotor und/oder einen Hydraulikmotor umfassen, der/die dazu geeignet ist/sind, mit der von den zweiten mitgeführten Mitteln (13) gespeicherten Energie versorgt zu werden.

11. Vorrichtung nach Anspruch 10, wobei mindestens ein Propeller (20, 30), der von den dritten Mitteln verwendet wird, um aerodynamische Bremskraft zu erzeugen, ebenfalls von den ersten Mitteln verwendet wird, um Energie zu erzeugen, die gespeichert werden kann.

12. Vorrichtung nach Anspruch 11, wobei der mindestens eine Generator (31), welcher dazu geeignet ist, Energie zu erzeugen, wenn er von dem mindestens einen Propeller (30) angetrieben wird, ebenfalls dazu geeignet ist, den Propeller (30) in Drehung zu versetzen, wenn er mit Energie versorgt wird.

13. Vorrichtung nach einem der vorhergehenden Ansprüche, wobei der mindestens eine Propeller (30) der ersten Mittel mit Mitteln (14) zur kinetischen Energieakkumulation mechanisch gekoppelt ist.

14. Vorrichtung nach einem der vorhergehenden Ansprüche, wobei die zweiten mitgeführten Mittel (13) dazu geeignet sind, von mindestens einem Generator (12) mit Energie versorgt zu werden, welcher an mitgeführte Leistungsgeneratoren (3) gekoppelt ist.

15. Vorrichtung nach einem der vorhergehenden Ansprüche, umfassend Steuermittel, welche auf den Anstellwinkel der Blätter (15) des oder der Propeller (10, 20, 30) einwirken.

## Claims

1. Device for the aerodynamic braking of a vehicle (1) travelling through the air comprising first on-board means (12, 10, 3, 4, 30, 31) for producing an energy that can be stored, second on-board means (13) able to store the energy generated by the said first means, and third on-board means (20, 21) for generating an aerodynamic braking force using the energy stored in the said second means, the said third means comprising at least one propeller (20, 30) driven rotationally in order to generate on the vehicle (1) a force opposite to the direction of travel through the air.

2. Device according to Claim 1, in which the first means comprise at least one propeller (10, 30) which can be driven rotationally by the relative movement of the vehicle (1) with respect to the mass of air, the said at least one propeller being coupled to at least one generator (12, 31) able to produce the energy that can be stored.

3. Device according to Claim 2, in which the vehicle (1) comprises wheels (4) which are driven, at least temporarily, in rotation by the movement of the said vehicle along the ground and in which the first on-board means for producing the energy comprise at least one generator (12), able to produce the energy that can be stored, able to be driven by the rotation of the said wheels.

4. Device according to one of Claims 1 to 3, in which the at least one generator (12, 31) able to produce the energy that can be stored is a compressor that compresses a gas or an electric generator or a hydraulic pump.

5. Device according to one of Claims 1 to 4, in which the second on-board means (13) able to store the energy are static energy-accumulation means comprising at least one reservoir for a compressed gas and/or at least one electric or electrochemical accumulator-type battery, and/or are kinetic energy accumulating means comprising at least one flywheel (14) able to rotate about an axis.

6. Device according to Claim 5, in which a flywheel (14) is able to be rotationally driven about its axis by a pneumatic motor and/or by an electric motor and/or by a hydraulic motor (32).

7. Device according to Claim 6, in which the flywheel (14) is able to drive the rotation of the energy generating means (32).

8. Device according to Claim 7, in which the energy generating means (32) comprise at least a pneumatic compressor and/or an electric generator and/or a hydraulic pump.

9. Device according to Claim 7 or Claim 8, in which the means (32) for driving the rotation of the at least one flywheel are able to generate the energy when they are being rotationally driven by the said at least one flywheel.

10. Device according to Claim 9, in which rotational-drive means (21, 31) coupled to the propeller (20, 30) comprise at least a pneumatic motor and/or an electric motor and/or a hydraulic motor able to be powered using the energy stored by the second on-board means (13).

11. Device according to Claim 10, in which at least one propeller (20, 30) used by the third means for generating the aerodynamic braking force is also used by the first means for producing the energy that can be stored.

12. Device according to Claim 11, in which the at least one generator (31) able to produce energy when it is driven by the at least one propeller (30) is also able to drive the rotation of the propeller (30) when it is powered with energy.

13. Device according to one of the preceding claims, in which the at least one propeller (30) of the first means is mechanically coupled to kinetic energy accumulation means (14).

14. Device according to one of the preceding claims, in which the second on-board means (13) are able to be powered with energy by at least one generator (12) coupled to on-board power generators (3).

15. Device according to one of the preceding claims, comprising control means influencing the pitch of the blades (15) of the propeller(s) (10, 20, 30).
